# EUROPEAN PATENT SPECIFICATION

(11) **EP 3 204 343 B1**
(45) Date of publication and mention of the grant of the patent: **09.06.2021**
(21) Application number: 15818089.3
(22) Date of filing: 08.10.2015
(51) Int. Cl.: C04B 41/61, C09D 5/22

(54) **SURFACE PROVIDED WITH A PATTERN OF LUMINESCENT ELEMENTS**
OBERFLÄCHE MIT EINEM MUSTER AUS LUMINESZENTEN ELEMENTEN
SURFACE POURVUE D'UN MOTIF D'ÉLÉMENTS LUMINESCENTS

(30) Priority: 10.10.2014 NL 2013607
(43) Date of publication of application: 16.08.2017
(73) Proprietor: Heijmans N.V., 5248 JT Rosmalen (NL)
(72) Inventor: DE WAAL, Vincent Hendrikus Arnoldus, NL-5248 JT Rosmalen (NL); HEERKENS, Josephus Cornelis Petrus, NL-5248 JT Rosmalen (NL)
(74) Representative: Algemeen Octrooi- en Merkenbureau B.V.
(86) International application number: PCT/NL2015/050706
(87) International publication number: WO 2016/056910

(56) References cited:
- WO-A2-2004/114260
- US-A1- 2003 051 638

## Description

The present invention relates to a surface provided with a pattern of luminescent elements, wherein the aforesaid luminescent elements are incorporated in at least the top layer of the aforesaid surface. The present invention further relates to a method for constructing a surface provided with a pattern of luminescent elements, wherein the aforesaid luminescent elements are incorporated in at least the top layer of the aforesaid surface.

A surface provided with a pattern of luminescent elements is known per se from NL 1036967. From NL 1036967 it is known to incorporate/apply luminous pieces of glass or plastic in/to concrete, which luminous pieces of glass comprise so-called luminous pigments, which light up in the dark. Examples in which such luminous pieces of glass or plastic can be incorporated include bricks, paving stones, kerbstones but also safety-enhancing obstacles. A drawback that arises in this context is that the pattern of luminous pieces of glass or plastic can be perceived even in daylight. This is considered to be undesirable.

From International application WO 2004/114260 there is known a method for producing a luminous image that is only visible in the dark and essentially invisible during the day on a structural part, in particular the image of a starry sky, such method comprises the following steps: production of a film serving as a template by cutting out the illustration from the film, gluing the film onto the structural part, filling the exposed surface parts of the structural part with a noctilucent, essentially translucent colour and peeling off the film.

From International application WO 02/40421 there is known a so-called photoluminescent plastic aggregate which comprises a photoluminescent pigment dispersed within a thermoset or cross-linked polymeric binder.

From German publication DE 3 809 937 there is known a method for producing construction materials having colour-emitting properties, wherein a pigment is melted in glass and wherein subsequently the pigment-containing glass is added as an additive in granular and/or powdery form to construction materials, from which subsequently bricks/stones are made, for example.

From US patent application US 2006/065879 there is known a luminous composition including cement and micro-capsules of an alkaline earth metal aluminate encapsulated in a light-transmitting resin.

From Canadian publication CA 2 512 259 there is known a luminous material wherein a surface comprises a number of layers, wherein at least one of the aforesaid layers comprises particles of a luminous material.

From European application EP 1 693 354 there is known an artificial stone moulded product comprising an aggregate of an inorganic material and a resin, wherein a luminescent material is embedded in the product.

British publication GB 348609 relates to a method for producing luminous elements in the form of slabs, blocks, posts, bricks or the like, based on a mass whose main component is concrete, cement, cast stone, imitation marble, clay or plaster, wherein the aforesaid component is mixed with a luminous preparation before, during or after the mass has the desired shape of the element.

Australian publication AU 2010202310 relates to a concrete structure, in particular a ground slab forming at least part of a footpath, driveway or public thoroughfare, wherein an exposed surface of the concrete structure comprises a photoluminescent aggregate, which photo luminescent aggregate is resin-based and includes a photoluminescent pigment.

From the above-discussed references it is known that stones comprising so-called luminous pigments are commercially available. If the aforesaid luminous stones are arranged in a pattern, for example in a road surface, the pattern as formed in the road surface will light up in particular in dark circumstances if the luminous stones have previously been "irradiated", for example, by artificial light from a street lamp, a passing car or bicycle, for example,

The aforesaid stones, also referred to as "glow-in-the-dark" stones in the industry, are in principle made of a matrix material in which the luminous pigment is incorporated. In practice such glow-in-the-dark stones can be embedded in a still liquid concrete mixture, after which the concrete mixture, once cured, forms a surface that can be subjected to loads, for example a road. Because in such a situation the glow-in-the-dark stones are mixed randomly in the concrete, only a limited number of glow-in-the-dark stones will be located at the surface of the concrete and thus be capable of performing the intended luminous function. It is also possible, however, to incorporate such glow-in-the-dark stones only in the top layer of the liquid concrete mixture so as to thus increase the effectiveness of the glow-in-the-dark stones.

A drawback of embedding glow-in-the-dark stones in the, for example concrete, top layer in this manner is that the glow-in-the-dark stones will be perceptible also in daylight conditions, in particular if they are arranged in a particular pattern. In dark circumstances, the pattern will be clearly visible if the glow-in-the-dark stones are first "irradiated".

Thus it is an object of the present invention to provide a road surface in which so-called glow-in-the-dark stones are present in the top layer, wherein the pattern in which the glow-in-the-dark stones are arranged will be hardly perceptible in daylight conditions.

Another object of the present invention is to provide a surface, in particular a road surface or a paved surface, in which a pattern of glow-in-the-dark stones is present, wherein the glow-in-the-dark stones are positioned in the top layer in such a manner that the aforesaid stones are durably incorporated therein.

The present invention as described in the introduction therefore relates to a surface provided with a pattern of luminescent elements, wherein the aforesaid luminescent elements are incorporated at least in the top layer of the aforesaid surface, characterised in that masking elements are present at least in the aforesaid top layer, the composition and size of which masking elements being such that the visibility of the aforesaid pattern in daylight conditions is reduced in comparison with a situation in which no such masking elements are present in the top layer of the aforesaid surface in which the aforesaid luminescent elements are incorporated at least in the top layer thereof, wherein said surface is selected from the group of bicycle path, moped path, footpath and car roadway, wherein in a dark situation the aforesaid pattern of luminescent elements will be visible after being irradiated.

With such a surface, one or more of the aforesaid objects are achieved. As a result of the presence of so-called masking elements in the top layer, in which top layer of the pattern of luminescent elements is present, the pattern of luminescent elements will hardly be visible in daylight conditions. Such masking elements thus function to mask or "remove" the pattern of luminescent elements more or less in daylight conditions. In a dark situation, on the other hand, the pattern of luminescent elements will be visible after being "irradiated".

The term "top layer" is in fact to be understood to mean the upper, viz. visible layer. Such a top layer may have a thickness of a few centimetres, but it is not limited to a specific thickness.

Luminescence takes place when high-energy electrons jump from an excited condition to a lower-energy orbit around the atomic nucleus, with the energy that is released being emitted as a photon by the electron, i.e. as electromagnetic radiation, for example radiation emitted within the wavelength range (about 400 nm ... about 780 nm) of the light that is visible to humans. The term "luminescence" as used herein is to be understood to include also fluorescence, phosphorescence (reflective) and chemoluminescence.

The luminescent elements as mentioned above are preferably made up of one or more components selected from the group of glass, plastic and resin, or a combination thereof, in which luminescent elements one or more luminescent pigments are incorporated. Luminescent elements may for example comprise phosphorescent, reflective or fluorescent pigments or combinations thereof. In addition to the aforesaid components, also rubber, polyurethane (PU), acrylate, natural stone chippings or a coated material may be used in certain embodiments.

The present invention also relates to a surface in which a pattern of coloured elements is incorporated. Such a pattern is configured so that the aforesaid elements will have the same colour in daylight conditions. The aforesaid elements comprise elements comprising luminescence pigments and elements that do contain pigments, to be true, but pigments that do not exhibit luminescence. The latter elements can be regarded as the present masking elements. By using a light source having a specific colour, with the possible addition of UV light, the two types of elements will light up in different ways. By way of non-limitative example, a coloured pattern comprising yellow elements, with elements comprising yellow luminescence pigments and masking elements comprising pigments not exhibiting yellow luminescence may be considered. The elements exhibiting yellow luminescence will light up more than the masking elements upon being irradiated with yellow light, so that a different pattern will show up in the evening than during the daytime, for example. The aforesaid luminescence pigments may comprise a combination of luminescence pigments, for example a combination of fluorescent and phosphorescent pigments. Such an application is suitable in particular for a surface made up of rubber.

It is in particular desirable that the percentage of luminescent pigment in the aforesaid luminescent elements ranges from 2 - 80%, preferably 4 - 15%, based on the weight of the aforesaid luminescent element.

In order to obtain a good perception of the present pattern of luminescent elements, it is preferable if the amount of luminescent elements in the aforesaid pattern ranges from 200 to 1500, preferably from 400 to 1300, in particular from 500 to 1200 luminescent elements/m².

The masking elements used in the present invention are preferably made from the group of glass, plastic and resin, or a combination thereof. In a particular embodiment it is desirable that the masking elements being used are made from the same matrix material as the luminescent elements but that the masking elements are provided with one or more pigments (colourants) which, in daylight conditions, have a colour that substantially corresponds to the colour of the luminescent elements being used. In a special embodiment it is also possible to use particular types of materials corresponding to the materials of the luminescent elements for the masking elements, but wherein one or more non-luminescent pigments are incorporated in the masking elements, wherein the aforesaid one or more pigments are used in such a manner that the masking elements obtained therewith will more or less correspond as regards their colour to the gravel and/or stone chippings in the concrete mixture being used.

The present inventors have in particular found that the selection of the masking elements to be used is more or less connected with the luminescent elements to be used, in which connection in particular colour and size play a part.

In a special embodiment, the masking elements used in the present invention comprise one or more non-luminescent pigments.

In order to make it possible to "remove" the visibility of the pattern of luminescent elements, in particular in daylight conditions, it is desirable that the average size of at least 80%, preferably at least 90%, of the aforesaid masking elements substantially corresponds to the average size of the aforesaid luminescent elements, which percentages are based on the total amount of luminescent elements present in the aforesaid surface.

In a special embodiment it is in particular preferable if the colour properties of the aforesaid masking elements in daylight conditions substantially correspond to those of the aforesaid luminescent elements.

The term "surface" used in the present application is to be understood to mean a layer that can be subjected to loads, for example from motor traffic. The surface that is concerned in the present invention is in particular selected from the group of concrete and asphalt. In certain embodiments it is also possible, however, to use a rubber composition, or a combination of one or more of the aforesaid surface types, as the surface. It should be noted in this regard that according to the present invention concrete may be poured in situ or be available in the form of prefabricated concrete elements. The surface may be a paved surface or a road surface, for example. The present inventors have found that the "masking" of the pattern of luminescent elements can be further enhanced if use is made of a special concrete composition comprising a higher weight percentage of gravel and/or stone chippings in the concrete mixture, in particular in comparison with a concrete mixture that is usually used for a paved surface or a road surface. A preferred weight percentage of gravel and/or stone chippings ranges from 15 to 80 wt.%, based on the weight of concrete, in particular gravel of the 4-16 type.

The present invention further relates to a method for constructing a surface provided with a pattern of luminescent elements, wherein the aforesaid luminescent elements are incorporated at least in the top layer of the surface, which method comprises the following steps:
i) providing a liquid surface;
ii) introducing one or more luminescent elements in a pattern into the top layer of the aforesaid liquid surface;
iii) introducing one or more masking elements into the top layer of the aforesaid liquid surface;
iv) curing the liquid surface obtained in steps ii) and iii); and
v) removing part of the aforesaid top layer, wherein the cured surface is a road surface selected from the group of bicycle path, moped path, footpath and car roadway, wherein in a dark situation the aforesaid pattern of luminescent elements will be visible after being irradiated.

Although step ii), viz. introducing one or more luminescent elements in a pattern, is carried out first in the aforesaid steps, the present inventors have also found that step ii) may also be preceded by step iii), viz. introducing one or more masking elements into the top layer of the liquid surface. It should be understood, therefore, that the sequence of steps ii) and iii) is not limited to carrying out step ii) first and subsequently step iii), but that it is also possible to have step iii) precede step ii).

In certain embodiments of the present method step ii) preferably further comprises introducing a mixture of luminescent elements and masking elements. It is thus possible to use not only luminescent elements but also masking elements in the pattern. It is preferable, however, that the pattern to be formed comprises more luminescent elements than masking elements.

In a special embodiment it is further possible to use a mixture of luminescent elements and masking elements in step ii), wherein preferably the percentage of luminescent elements used in the mixture according to step ii) is higher than the percentage of luminescent elements used in step iii).

To obtain the intended pattern it is desirable to make use of one or more templates in step ii). In a special embodiment it is also possible, however, to use one or more templates in step iii).

To carry out step ii) it is possible in special embodiments to make use of a substrate provided with luminescent elements, possibly in combination with masking elements, wherein the substrate is removed in an additional step, preferably during step v). In that case it is possible, for example, to use a self-adhesive film as the substrate, on which self-adhesive film luminescent elements are present, possibly in combination with masking elements. Possible substrates also include a membrane, a fabric, a nonwoven, paper or a plastic. Such a film is then pressed into the still liquid top layer of the surface with the side thereof on which the luminescent elements, possibly in combination with the masking elements, are present, after which the film can be removed, resulting in the luminescent elements, and possibly the masking elements being used, remaining behind in the top layer.

In a special embodiment it is also possible to introduce translucent elements, for example glass beads, in the liquid surface, in order to thus make the surface slightly translucent.

In the embodiment of a rubber-based surface it is preferable to mix the luminescent elements first with elements that do not comprise luminescent pigments. This mixture is subsequently applied in a pattern, for example to a concrete surface, whereupon a desired amount of elements not comprising luminescent elements is applied around the pattern. It is desirable that the amount of luminescent elements in the mixture of which the pattern is formed ranges from 3 to 20 vol.%, preferably from 5 to 15 vol.%, based on the volume of the final pattern mixture of luminescent elements and non-luminescent elements.

The present invention thus relates to a method for constructing a surface provided with a pattern of luminescent elements, wherein the aforesaid luminescent elements are incorporated at least in the top layer of the aforesaid surface, wherein in a special embodiment the aforesaid method comprises the following steps:
a) providing luminescent elements,
b) providing masking elements that do not comprise luminescent pigments,
c) mixing the elements of steps a) and b),
d) applying the mixture obtained in step c) in a pattern, and
e) applying an amount of base elements not comprising luminescent pigments around the pattern obtained in step d), wherein the cured surface is a road surface selected from the group of bicycle path, moped path, footpath and car roadway, wherein in a dark situation the aforesaid pattern of luminescent elements will be visible after being irradiated.

It is in particular preferable that the aforesaid luminescent elements, masking elements and/or base elements are rubber based.

The aforesaid masking elements and/or base elements preferably comprise one or more non-luminescent pigments. It is in particular desirable that the colour of the aforesaid masking elements and/or base elements corresponds to the colour of the aforesaid luminescent elements.

The surface referred to herein is selected from the group of bicycle (moped) path, pedestrian path and car roadway. In a special embodiment it is on the other hand also possible to construct a floor or a wall using the present method.

The present invention further relates to a surface as discussed above wherein use is furthermore made of one or more means for artificially irradiating the luminescent elements. Think in this regard of active light sources such as streetlamps or other street lighting, but also UV light sources or light sources having a specific colour, for example a light source which emits red or blue light. In daylight, for example, the surface may be a surface composed of various coloured elements arranged in a seemingly random pattern, but by exposing it to a particular colour, viz. from an active light source, only one colour will become visible, for example, so that a pattern will show up. According to another embodiment it is possible to have two types of luminescent elements in one particular colour, which each react differently to the light source. In this way it has been found to be possible to mask part of the pattern in a daylight situation in comparison with the situation at night. The aforesaid lighting can be turned on and off according to a specific pattern so as to thus cause the pattern of luminescent elements to light up according to a specific time profile. The pattern of luminescent elements can thus be perceived during the night.

By contrast it is also possible to install one or more light elements in the surface first, after which the pattern of luminescent elements is applied, which light elements thus irradiate the luminescent elements from "below", so that a more or less luminous surface or floor is obtained.

The present invention will now be explained by means of a number of examples, in which regard it should be noted, however, that the invention is by no means limited to such special examples.

Non-limitative examples of luminescent elements and masking elements, in particular for a concrete or asphalt surface, include: phosphorescent pigment incorporated in glass, masked with a combination of natural stones, a combination of fluorescent and phosphorescent pigment in polyurethane masked with a coloured acrylate, natural-coloured stone chippings and/or fluorescent acrylate, fluorescent pigment in polyurethane or acrylate masked with natural-coloured stone chippings or colour pigment in glass.

Non-limitative examples of luminescent elements and masking elements, in particular for a surface of rubber, include: a combination of fluorescent and phosphorescent pigment in polyurethane masked with coloured rubber particles.

### Example 1

A liquid concrete mixture comprising a higher gravel percentage than a usual concrete mixture, in particular a gravel percentage of 30 wt.%, is applied to a base layer using a paver, or manually or as a prefabricated element. Then a template is placed on the still wet concrete mixture, which template is provided with the desired pattern. An amount of luminescent elements is scattered in the pattern. It is also possible to use a mixture of luminescent elements and masking elements in this step. Subsequently the area not covered by the template is infilled with an amount of masking elements. It is also possible to use a mixture of masking elements and luminescent elements for this area. Although mention is made of a so-called "positive" template in this example, which template relates to the intended pattern, it is also possible to use a so-called "negative" template, in which, quite conversely, the template indicates the area where no pattern is wanted. Once the luminescent elements and masking elements have been applied to the top layer of the concrete, it is preferable that the elements are slightly pressed into the top layer so as to obtain a good bond therewith. Once the liquid concrete mixture has attained sufficient initial strength, it is desirable that the surface be scoured, or sand-blasted. The result of such a treatment is that the luminescent elements, the masking elements and the gravel present in the concrete mixture become visible. In a special embodiment it is also possible to treat the surface with a retardant first, so that the surface can be washed out. To prevent the luminescent elements and the masking elements from becoming detached from the concrete surface, for example as a result of the aforesaid sandblasting or scouring, or due to frost, it is desirable that the luminescent elements and masking elements be surrounded by a layer of concrete.

### Example 2

In Example 2 the same concrete mixture and the same finishing operation of the cured concrete as in Example 1 are used, with this exception that use is made of a so-called self-adhesive film for applying the luminescent elements and masking elements. The self-adhesive film is provided with a pattern of luminescent elements as well as with areas in which masking elements are present. The film thus obtained is pressed into the top layer of the still wet concrete mixture with the side on which the luminescent elements and masking elements are present. After curing of the concrete mixture, the film is removed, for example by scouring, sandblasting or the like.

### Example 3

This example is more or less analogous to the operations as described in Example 2, but in Example 3 use is made of an adhesive material that can be removed using water, such as potato starch. The luminescent elements and masking elements are partially placed in starch, whereupon the film provided with such "sticky" masking elements and luminescent elements is placed in the top layer of the still wet, liquid concrete mixture. In this case, too, the film is removed once a predetermined initial strength of the concrete is reached, as is the starch.

### Example 4

A surface is provided with a pattern of luminescent elements, using two different types of luminescent elements, viz. a first type of luminescent element in which an alkaline earth aluminate type of inorganic pigment is used. This type I provides a pale blue colour in the dark. The second type of luminescent element is different from the first type of luminescent element as regards the selection of the alkaline earth aluminate type of inorganic pigment, in particular as regards the colour to be emitted, viz. a yellow green colour.

The table below shows a number of embodiments from which it is clearly apparent what amounts of luminescent elements and masking elements are used in the region where the pattern is to be present and in the region where the pattern is not present.

**Table**

| | Green | Blue | White | Total |
|---|---|---|---|---|
| 1.0.A | 37 | 18 | 495 | 550 |
| B | 110 | 55 | 385 | 550 |
| 1.5.A | 55 | 28 | 743 | 825 |
| C | 293 | 147 | 385 | 825 |
| 2.0 A | 73 | 37 | 990 | 1100 |
| D | 733 | 367 | 0 | 1100 |

The values indicated in the table relate to the average number of stones per m². In the above table the designations "B", "C" and "D" relate to the pattern to be used. The areas indicated "A" are the non-pattern areas.

In a surface provided with pattern "B" of luminescent elements, for example, which thus comprises 110 green luminescent stones, 55 blue luminescent stones and 385 white masking stones, it is possible to use an amount of luminescent stones according to 1.0.A in the non-pattern area, viz. a combination of 37 green luminescent stones, 18 blue luminescent stones and 495 white masking stones. Such an embodiment, viz. a combination of 1.0.A and B, is used if a small amount of luminescent stones is used in the pattern.

In the embodiment in which pattern "C" is used, it is desirable to use an amount of 1.5.A luminescent stones in the non-pattern area. Such an embodiment is used if the presence of an average amount of luminescent stones in the pattern is desirable.

In an embodiment in which a large amount of luminescent elements is used, indicated "D" in the aforesaid table, it is preferable to use an amount of 2.0.A luminescent stones in the non-pattern area.

From the above table it follows that in a situation in which there is no pattern at all, which means that "B", "C" and "D" are missing, the amount of stones is on average about 550 per m². In the above-discussed situation of pattern "C", the total amount of stones in the non-pattern area is practically the same as the amount of stones in the pattern area, viz. 825 stones per m². In the embodiment of pattern "D", an amount of stones of 1100 per m² is used, which amount applies to pattern "D" as well as to the non-pattern area. The aforesaid amounts are merely to be regarded as illustrative.

## Claims

1. A surface provided with a pattern of luminescent elements, wherein the aforesaid luminescent elements are incorporated at least in the top layer of the aforesaid surface, **characterised in that** masking elements are present at least in the aforesaid top layer, the composition and size of which masking elements being such that the visibility of the aforesaid pattern in daylight conditions is reduced in comparison with a situation in which no such masking elements are present in the top layer of the aforesaid surface in which the aforesaid luminescent elements are incorporated at least in the top layer thereof, wherein said surface is selected from the group of bicycle path, moped path, footpath and car roadway, wherein in a dark situation the aforesaid pattern of luminescent elements will be visible after being irradiated.

2. A surface according to claim 1, **characterised in that** the aforesaid luminescent elements are made up of one or more components selected from the group of glass, plastic, rubber, polyurethane (PU), acrylate, natural stone chippings and resin, or a combination thereof, in which luminescent elements one or more luminescent pigments are incorporated.

3. A surface according to one or both of the preceding claims, **characterised in that** the percentage of luminescent pigment in the aforesaid luminescent elements ranges from 2 - 80%, preferably 4 - 15%, based on the weight of the aforesaid luminescent element.

4. A surface according to one or more of the preceding claims, **characterised in that** the amount of luminescent elements in the aforesaid pattern ranges from 200 to 1500, preferably from 400 to 1300, in particular from 500 to 1200 luminescent elements/m², wherein the aforesaid masking elements are preferably made from the group of glass, plastic and resin, or a combination thereof.

5. A surface according to one or more of the preceding claims, **characterised in that** the aforesaid masking elements comprise one or more non-luminescent pigments.

6. A surface according to one or more of the preceding claims, **characterised in that** the surface is selected from the group of concrete, asphalt and rubber or a combination thereof.

7. A method for constructing a surface provided with a pattern of luminescent elements according to any one or more of the preceding claims, wherein the aforesaid luminescent elements are incorporated at least in the top layer of the surface, which method comprises the following steps:
i) providing a liquid surface;
ii) introducing one or more luminescent elements in a pattern into the top layer of the aforesaid liquid surface;
iii) introducing one or more masking elements into the top layer of the aforesaid liquid surface;
iv) curing the liquid surface obtained in steps ii) and iii); and
v) removing part of the aforesaid top layer, wherein the cured surface is a road surface selected from the group of bicycle path, moped path, footpath and car roadway, wherein in a dark situation the aforesaid pattern of luminescent elements will be visible after being irradiated.

8. A method according to claim 7, **characterised in that** step ii) further comprises introducing a mixture of luminescent elements and masking elements.

9. A method according to either one of claims 7-8, **characterised in that** step ii) further comprises introducing a mixture of luminescent elements and masking elements, wherein the percentage of luminescent elements used in the mixture according to step ii) is higher than the percentage of luminescent elements used in step iii).

10. A method according to either on of claims 7-9, **characterised in that** use is made in step ii) of one or more templates for obtaining the intended pattem.

11. A method according to either on of claims 7-9, **characterised in that** use is made in step ii) of a substrate provided with luminescent elements, possibly in combination with masking elements, wherein the substrate is removed in an additional step during step v).

12. A method for constructing a surface provided with a pattern of luminescent elements according to any one or more of claims 1-6, wherein the aforesaid luminescent elements are incorporated at least in the top layer of the aforesaid surface, **characterised in that** the aforesaid method comprises the following steps:
a) providing luminescent elements,
b) providing masking elements that do not comprise luminescent pigments,
c) mixing the elements of steps a) and b),
d) applying the mixture obtained in step c) in a pattern, and
e) applying an amount of base elements not comprising luminescent pigments around the pattern obtained in step d), wherein the surface is a road surface selected from the group of bicycle path, moped path, footpath and car roadway, wherein in a dark situation the aforesaid pattern of luminescent elements will be visible after being irradiated.

13. A method according to claim 12, **characterised in that** the aforesaid luminescent elements, masking elements and/or base elements are rubber based, especially that the aforesaid masking elements and/or base elements comprise one or more non-luminescent pigments, especially that the colour of the aforesaid masking elements and/or base elements corresponds to the colour of the aforesaid luminescent elements.

14. A surface according to either one of claims 1-6, **characterised in that** said road surface is provided with one or more means for artificially irradiating luminescent elements, wherein the aforesaid means comprise a light source with a specific colour, in particular a light source with a specific wavelength in combination with UV light, wherein one or more of the aforesaid means for artificially irradiating is located below the upper side of the aforesaid road surface.

## Patentansprüche

1. Oberfläche, die mit einem Muster aus lumineszenten Elementen ausgestattet ist, wobei die genannten lumineszenten Elemente mindestens in die Deckschicht der genannten Oberfläche eingearbeitet sind, **dadurch gekennzeichnet, dass** Maskierelemente in mindestens der genannten Deckschicht vorhanden sind, wobei die Zusammensetzung und Größe dieser Maskierelemente so ist, dass die Sichtbarkeit des genannten Musters unter Tageslichtbedingungen reduziert ist, verglichen mit einer Situation, in der keine derartigen Maskierelemente in der Deckschicht der genannten Oberfläche vorhanden sind, wobei die genannten lumineszenten Elemente in mindestens deren Deckschicht eingearbeitet sind, wobei die Oberfläche ausgewählt ist aus der Gruppe aus einem Fahrradweg, einem Weg für motorisierte Zweiräder, einem Fußweg und einer Straße für Kraftfahrzeuge, wobei in einer Dunkelheitssituation das genannte Muster der lumineszenten Elemente sichtbar wird, nachdem es angestrahlt wurde.

2. Oberfläche nach Anspruch 1, **dadurch gekennzeichnet, dass** die genannten lumineszenten Elemente aus einer oder mehreren Komponenten ausgewählt aus der Gruppe aus Glas, Kunststoff, Kautschuk, Polyurethan (PU), Acrylat, Natursplitt und Harz oder einer Kombination davon gefertigt sind, wobei in die lumineszenten Elemente ein oder mehrere lumineszente Pigmente eingearbeitet sind.

3. Oberfläche nach einem oder beiden der vorhergehenden Ansprüche, **dadurch gekennzeichnet, dass** der Prozentsatz des lumineszenten Pigments in den genannten lumineszenten Elementen im Bereich von 2 bis 80 %, vorzugsweise 4 bis 15 % liegt, bezogen auf das Gewicht des genannten lumineszenten Elements.

4. Oberfläche nach einem der vorhergehenden Ansprüche, **dadurch gekennzeichnet, dass** die Menge der lumineszenten Elemente in dem genannten Muster im Bereich von 200 bis 1500, vorzugsweise 400 bis 1300, insbesondere 500 bis 1200 lumineszenten Elementen/m² liegt, wobei die genannten Maskierelemente vorzugsweise aus der Gruppe von Glas, Kunststoff und Harz oder einer Kombination davon gefertigt sind.

5. Oberfläche nach einem oder mehreren der vorhergehenden Ansprüche, **dadurch gekennzeichnet, dass** die genannten Maskierelemente ein oder mehrere nicht-lumineszente Pigmente umfassen.

6. Oberfläche nach einem der vorhergehenden Ansprüche, **dadurch gekennzeichnet, dass** die Oberfläche ausgewählt ist aus der Gruppe von Beton, Asphalt und Kautschuk oder einer Kombination davon.

7. Verfahren zum Bauen einer Oberfläche, die mit einem Muster aus lumineszenten Elementen gemäß einem oder mehreren der vorhergehenden Ansprüche ausgestattet ist, wobei die genannten lumineszenten Elemente in mindestens die Deckschicht der Oberfläche eingearbeitet sind, wobei das Verfahren die folgenden Schritte umfasst:
i) Bereitstellen einer flüssigen Oberfläche;
ii) Einbringen von einem oder mehreren lumineszenten Elementen in einem Muster in die Deckschicht der genannten flüssigen Oberfläche;
iii) Einbringen von einem oder mehreren Maskierelementen in die Deckschicht der genannten flüssigen Oberfläche;
iv) Härten der in den Schritten ii) und iii) erhaltenen flüssigen Oberfläche; und
v) Entfernen eines Teils der genannten Deckschicht, wobei die gehärtete Oberfläche eine Straßenoberfläche ausgewählt aus der Gruppe aus Fahrradweg, Weg für motorisierte Zweiräder, Fußweg und Straße für Kraftfahrzeuge ist, wobei in einer Dunkelheitssituation das genannte Muster der lumineszenten Elemente sichtbar wird, nachdem es angestrahlt wurde.

8. Verfahren nach Anspruch 7, **dadurch gekennzeichnet, dass** Schritt ii) des Weiteren Einbringen einer Mischung aus lumineszenten Elementen und Maskierelementen umfasst.

9. Verfahren nach einem der Ansprüche 7 bis 8, **dadurch gekennzeichnet, dass** Schritt ii) des Weiteren Einbringen einer Mischung aus lumineszenten Elementen und Maskierelementen umfasst, wobei der Prozentsatz der lumineszenten Elementen, der in der Mischung gemäß Schritt ii) verwendet wird, höher als der Prozentsatz der lumineszenten Elemente ist, der in Schritt iii) verwendet wird.

10. Verfahren nach einem der Ansprüche 7 bis 9, **dadurch gekennzeichnet, dass** in Schritt ii) eine oder mehrere Schablonen verwendet werden, um das vorgesehene Muster zu erhalten.

11. Verfahren nach einem der Ansprüche 7 bis 9, **dadurch gekennzeichnet, dass** in Schritt ii) ein Substrat, das mit lumineszenten Elementen ausgestattet ist, möglicherweise in Kombination mit Maskierelementen verwendet wird, wobei das Substrat in einem zusätzlichen Schritt während Schritt v) entfernt wird.

12. Verfahren zum Bauen einer Oberfläche, die mit einem Muster aus lumineszenten Elementen gemäß einem oder mehreren der Ansprüche 1 bis 6 ausgestattet ist, wobei die genannten lumineszenten Elemente in mindestens die Deckschicht der Oberfläche eingearbeitet werden, **dadurch gekennzeichnet, dass** das Verfahren die folgenden Schritte umfasst:
a) Bereitstellen von lumineszenten Elementen;
b) Bereitstellen von Maskierelementen, die nicht lumineszente Pigmente umfassen,
c) Mischen der Elemente der Schritte a) und b),
d) Aufbringen der in Schritt c) erhaltenen Mischung in einem Muster, und
e) Aufbringen einer Menge an Basiselementen, die keine lumineszenten Pigmente umfassen, um das in Schritt d) erhaltene Muster herum, wobei die Oberfläche eine Straßenoberfläche ausgewählt aus der Gruppe aus Fahrradweg, Weg für motorisierte Zweiräder, Fußweg und Straße für Kraftfahrzeuge ist, wobei in einer Dunkelheitssituation das genannte Muster der lumineszenten Elemente sichtbar wird, nachdem es angestrahlt wurde.

13. Verfahren nach Anspruch 12, **dadurch gekennzeichnet, dass** die genannten lumineszenten Elemente, Maskierelemente und/oder Basiselemente auf Kautschukbasis sind, insbesondere dass die genannten Maskierelemente und/oder Basiselemente ein oder mehrere nicht-lumineszente Pigmente umfassen, insbesondere dass die Farbe der genannten Maskierelemente und/oder Basiselemente der Farbe der genannten lumineszenten Elemente entspricht.

14. Oberfläche nach einem der Ansprüche 1 bis 6, **dadurch gekennzeichnet, dass** die Straßenoberfläche mit einem oder mehreren Mitteln zum künstlichen Anstrahlen von lumineszenten Elementen ausgestattet ist, wobei die genannten Mittel eine Lichtquelle mit einer speziellen Farbe umfasst, insbesondere eine Lichtquelle mit einer speziellen Wellenlänge in Kombination mit UV-Licht, wobei ein oder mehrere der genannten Mittel zum künstlichen Anstrahlen sich unter der Oberseite der genannten Straßenoberfläche befinden.

## Revendications

1. Surface pourvue d'un motif d'éléments luminescents, où les éléments luminescents susmentionnés sont incorporés au moins dans la couche supérieure de la surface susmentionnée, **caractérisée en ce que** des éléments de masquage sont présents au moins dans la couche supérieure susmentionnée, la composition et la taille desquels éléments de masquage étant telles que la visibilité du motif susmentionné dans des conditions de lumière du jour est réduite par rapport à une situation dans laquelle aucun de ces éléments de masquage n'est présent dans la couche supérieure de la surface susmentionnée dans laquelle les éléments luminescents susmentionnés sont incorporés au moins dans la couche supérieure de celle-ci, où ladite surface est choisie dans le groupe constitué de piste cyclable, de piste pour cyclomoteur, de trottoir et de chaussée de voiture, où, dans une situation sombre, le motif susmentionné d'éléments luminescents sera visible après avoir été irradié.

2. Surface selon la revendication 1, **caractérisée en ce que** les éléments luminescents susmentionnés sont faits d'un ou de plusieurs composant(s) choisi(s) dans le groupe constitué de verre, de plastique, de caoutchouc, de polyuréthane (PU), d'acrylate, de gravillons naturels et de résine, ou d'une combinaison de ceux-ci, dans ces éléments luminescents un ou plusieurs pigment(s) luminescent(s) est/sont incorporé(s).

3. Surface selon l'une ou les deux des revendications précédentes, **caractérisée en ce que** le pourcentage de pigment luminescent dans les éléments luminescents susmentionnés varie de 2 à 80%, de préférence de 4 à 15%, par rapport au poids de l'élément luminescent susmentionné.

4. Surface selon une ou plusieurs des revendications précédentes, **caractérisée en ce que** la quantité d'éléments luminescents dans le motif susmentionné varie de 200 à 1500, de préférence de 400 à 1300, en particulier de 500 à 1200 éléments luminescents/m², où les éléments de masquage susmentionnés sont de préférence fabriqués à partir du groupe constitué de verre, de plastique et de résine, ou d'une combinaison de ceux-ci.

5. Surface selon une ou plusieurs des revendications précédentes, **caractérisée en ce que** les éléments de masquage susmentionnés comprennent un ou plusieurs pigment(s) non luminescent(s).

6. Surface selon une ou plusieurs des revendications précédentes, **caractérisée en ce que** la surface est choisie dans le groupe constitué de béton, d'asphalte et de caoutchouc ou d'une combinaison de ceux-ci.

7. Procédé de construction d'une surface pourvue d'un motif d'éléments luminescents selon une ou plusieurs des revendications précédentes, où les éléments luminescents susmentionnés sont incorporés au moins dans la couche supérieure de la surface, lequel procédé comprend les étapes suivantes consistant :
i) à fournir une surface liquide ;
ii) à introduire un ou plusieurs élément(s) luminescent(s) selon un motif dans la couche supérieure de la surface liquide susmentionnée ;
iii) à introduire un ou plusieurs élément(s) de masquage dans la couche supérieure de la surface liquide susmentionnée ;
iv) à durcir la surface liquide obtenue aux étapes ii) et iii) ; et
v) à retirer une partie de la couche supérieure susmentionnée, où la surface durcie est une surface de route choisie dans le groupe constitué de piste cyclable, de piste pour cyclomoteur, de trottoir et de chaussée de voiture, où, dans une situation sombre, le motif susmentionné d'éléments luminescents sera visible après avoir été irradié.

8. Procédé selon la revendication 7, **caractérisé en ce que** l'étape ii) comprend en outre l'introduction d'un mélange d'éléments luminescents et d'éléments de masquage.

9. Procédé selon l'une des revendications 7 et 8, **caractérisé en ce que** l'étape ii) comprend en outre l'introduction d'un mélange d'éléments luminescents et d'éléments de masquage, où le pourcentage d'éléments luminescents utilisés dans le mélange selon l'étape ii) est supérieur au pourcentage d'éléments luminescents utilisés dans l'étape iii).

10. Procédé selon l'une des revendications 7 à 9, **caractérisé en ce que** l'on utilise dans l'étape ii) un ou plusieurs gabarit(s) pour obtenir le motif souhaité.

11. Procédé selon l'une des revendications 7 à 9, **caractérisé en ce que** l'on utilise dans l'étape ii) un substrat pourvu d'éléments luminescents, éventuellement en combinaison avec des éléments de masquage, où le substrat est retiré dans une étape supplémentaire au cours de l'étape v).

12. Procédé de construction d'une surface pourvue d'un motif d'éléments luminescents selon une ou plusieurs des revendications 1 à 6, où les éléments luminescents susmentionnés sont incorporés au moins dans la couche supérieure de la surface susmentionnée, **caractérisé en ce que** le procédé susmentionné comprend les étapes suivantes consistant :
a) à fournir des éléments luminescents,
b) à fournir des éléments de masquage qui ne comprennent pas de pigments luminescents,
c) à mélanger les éléments des étapes a) et b),
d) à appliquer le mélange obtenu à l'étape c) selon un motif, et
e) à appliquer une quantité d'éléments de base ne comprenant pas de pigments luminescents autour du motif obtenu à l'étape d), où la surface est une surface de route choisie dans le groupe constitué de piste cyclable, de piste pour cyclomoteur, de trottoir et de chaussée de voiture, où, dans une situation sombre, le motif susmentionné d'éléments luminescents sera visible après avoir été irradié.

13. Procédé selon la revendication 12, **caractérisé en ce que** les éléments luminescents, les éléments de masquage et/ou les éléments de base susmentionnés sont à base de caoutchouc, notamment **en ce que** les éléments de masquage et/ou les éléments de base susmentionnés comprennent un ou plusieurs pigment(s) non luminescent(s), notamment **en ce que** la couleur des éléments de masquage et/ou des éléments de base susmentionnés correspond à la couleur des éléments luminescents susmentionnés.

14. Surface selon l'une des revendications 1 à 6, **caractérisée en ce que** ladite surface de route est pourvue d'un ou de plusieurs moyen(s) pour irradier artificiellement des éléments luminescents, où les moyens susmentionnés comprennent une source lumineuse avec une couleur spécifique, en particulier une source lumineuse avec une longueur d'onde spécifique en combinaison avec une lumière UV, où un ou plusieurs des moyens susmentionnés d'irradiation artificielle est/sont situé(s) en dessous du côté supérieur de la surface de route susmentionnée.
